# EUROPEAN PATENT APPLICATION

(11) **EP 4 749 832 A1**
(43) Date of publication of application: **27.05.2026**
(21) Application number: 24215063.9
(22) Date of filing: 25.11.2024
(51) Int. Cl.: H01R 4/70, H01R 43/00, H01R 13/44, H01R 43/20

(54) **APPARATUS AND METHOD FOR ELECTRICALLY INSULATING AN ELECTRICAL WIRING TERMINAL**

(71) Applicant: Aptiv Technologies AG, 8200 Schaffhausen (CH)
(72) Inventor: SILVA, Marco, 1675-073 Odivelas (PT); CORREIA, Alexandre, 2750-481 Cascais (PT); FERREIRA, Joao Ricardo, 6000-134 Castelo Branco (PT)
(74) Representative: INNOV-GROUP

(57) **Abstract**

Device and method for electrically insulating an electrical wiring terminal by applying an electrically insulating adhesive tape, comprising :
- a holding claw (2) movable between: a folding position; and a winding position;
- a folding table comprising a first folding lever; and second folding lever;
- a winding drum (19).

## Description

### TECHNICAL FIELD

The invention relates to the field of electrical wiring and in particular to means for electrically insulating a terminal from an electrical wiring element.

The invention takes place in the context of the industrial production of complex electrical harnesses, particularly in the automotive field, where it may be necessary to insulate electrical terminals relating to interconnections in the electrical wiring.

### PRIOR ART

It has been known to insulate the electrical terminals of wiring elements in a wiring harness by applying heat-shrink tubing. However, these processes involve material and process costs that do not meet the criteria for mass production. Moreover, under certain conditions, this type of insulation cannot insulate a terminal on all sides.

It is also known to insulate electrical terminals of wiring elements of a wiring harness by applying adhesive tape. These processes have their advantages, but are difficult to put in place in an industrial environment.

### DISCLOSURE OF THE INVENTION

The purpose of the invention is to improve the insulation means of an electrical wiring terminal.

To this end, the invention relates to a device for electrically insulating an electrical wiring terminal by applying an electrically insulating adhesive tape, comprising:
- a holding claw adapted to hold an electrical wiring element having a terminal to be electrically insulated, this holding claw being movable between: a folding position in which the holding claw arranges the electrical wiring element along a folding axis; and a winding position in which the holding claw arranges the electrical wiring element along a winding axis;
- a folding table having a receiving surface adapted to receive a insulating adhesive tape portion;
- a winding drum adapted to rotate about the winding axis and comprising at least two jaws adapted to clamp concentrically on the winding axis.

The folding table further comprises:
- a first folding lever rotatably mounted about an axis which is substantially perpendicular to the folding axis and which is disposed inside a first cavity of the folding table, this first folding lever comprising at least one bonding finger, this first folding lever being rotatable between : a retracted position in which the first folding lever is arranged in the first cavity, below the level of the receiving surface; and a deployed position in which the at least one bonding finger is arranged against the receiving surface;
- a second folding lever mounted for rotation about an axis which is substantially parallel to the folding axis and which is disposed inside a second cavity of the folding table, this second folding lever comprising a bonding bar substantially parallel to the folding axis, this second folding lever being rotatable between : a retracted position in which the second folding lever is arranged in the second cavity, below the level of the receiving surface; and a deployed position in which the bonding bar is arranged against the receiving surface.

According to another object, the invention is directed to a method of electrically insulating an electrical wiring terminal by applying an electrically insulating adhesive tape using an electrical insulating device as previously described, this method comprising the following steps:
- place an insulating adhesive tape portion on the folding table, adhesive side up;
- place on the holding claw an electrical wiring element having at its end the terminal to be insulated, the holding claw being in its winding position;
- move the holding claw to its folding position, the terminal to be insulated coming into contact with the adhesive face of the insulating adhesive tape portion;
- activate the first folding lever to its deployed position;
- activate the second folding lever to its deployed position;
- move the holding claw to its winding position;
- with the winding drum in a standby position, away from the winding axis, open the jaws of the winding drum;
- move the winding drum to a working position on the winding axis and close the jaws of the winding drum on the terminal fitted with the insulating adhesive tape portion;
- rotate the winding drum.

The invention enables electrical insulation to be produced by applying an electrically insulating adhesive tape, advantageously combining the low material cost of adhesive tape with the control provided by a fully automated process, guaranteeing the repeatability and quality required for large-scale industrial production.

The insulation device according to the invention may comprise the following additional features, alone or in combination:
- the first folding lever has two bonding fingers, arranged on either side of the folding direction when the first folding lever is in its deployed position;
- the bonding bar of the second folding lever is substantially parallel to the folding axis;
- it comprises a positioning stop for the terminal, adapted to be aligned with the winding axis;
- the positioning stop and the winding drum are mounted on a single frame which can be moved in translation between two positions corresponding to a standby position of the winding drum and a working position of the winding drum;
- the winding drum comprises three jaws adapted to clamp concentrically on the winding axis;
- the winding drum comprises : two symmetrical jaws formed by rotating levers rotatably mounted on the winding drum, each having cylindrical contact surfaces; and a central jaw formed by a pad movable in translation in a direction substantially perpendicular to the winding axis, and comprising a cylindrical contact surface;
- the jaws of the winding drum have self-centering springs, and are normally closed;
- the winding drum comprises an opening device adapted to open the jaws;
- the folding axis and the winding axis are substantially parallel and vertically aligned;
- the folding table is arranged below the winding drum;
- the holding claw is mounted on a lifting element;
- it comprises a tilting clamp adapted to grasp an insulating adhesive tape portion and turn it over;
- the tilting clamp comprises a telescopic body mounted on a pivot, and is adapted to place the insulating adhesive tape portion on the folding table, adhesive side up.

### PRESENTATION OF FIGURES

Further features and advantages of the invention will be apparent from the following non-limiting description, with reference to the appended drawings in which :
- Figure 1 is a perspective view of the folding table of the insulation device according to the invention;
- Figure 2 is a perspective view of the winding drum of the insulation device according to the invention;
- figure 3 illustrates the gripping of a portion of adhesive tape by a tilting clamp;
- figure 4 illustrates the rotation of the tilting clamp;
- Figure 5 illustrates the positioning of the adhesive tape portion on the folding table;
- Figure 6 illustrates the positioning of an electrical wiring element, with a terminal to be insulated, in a holding claw of the device according to the invention;
- Figure 7 illustrates the positioning of the electrical wiring element on the folding table;
- figure 8 illustrates the formation of a first fold on the adhesive tape portion;
- figure 9 illustrates the formation of a second fold on the adhesive tape portion;
- figure 10 illustrates the positioning of the electrical wiring element in a winding position;
- figure 11 illustrates the positioning of the winding drum for a winding operation of the adhesive tape portion;
- figure 12 is a cross-sectional view illustrating the internal arrangement of the winding drum during the winding operation;
- figure 13 is a view of the electrical wiring element after the winding operation.

Elements which are similar and common to the various embodiments bear the same figure reference numbers.

### DETAILED DESCRIPTION

The invention relates to a device for electrically insulating an electrical wiring terminal by applying an electrically insulating adhesive tape. This device is used for the production of complex wiring systems such as electrical harnesses in the automotive sector. In this type of wiring harness, numerous wires and connectors are interconnected, with conduction paths distributed and split between multiple connectors. In such wiring harnesses, it is sometimes necessary to insert terminals within the wiring, which then require electrical insulation. For example, two cable ends may be soldered or crimped into such a terminal.

The device according to the invention provides electrical isolation suitable for this type of terminal. This electrical isolation device is suitable for a high-speed industrial environment in which this isolation device is placed between adhesive tape portion dispensing means, such as a dispenser 1, and other electrical harness production stations.

The insulation device comprises a holding claw 2 adapted to hold the electrical wiring element 3 which has a terminal 4 to be electrically insulated.

In the present example, the electrical wiring element 3 corresponds to one or more insulated electrical wires, running in parallel, the end of which has a soldering, a connector, a crimping, etc., which constitutes said terminal 4. This terminal 4 is intended to be electrically insulated, thanks to the insulation device, so that the wiring element 3 can be safely inserted into the complete electrical harness being manufactured.

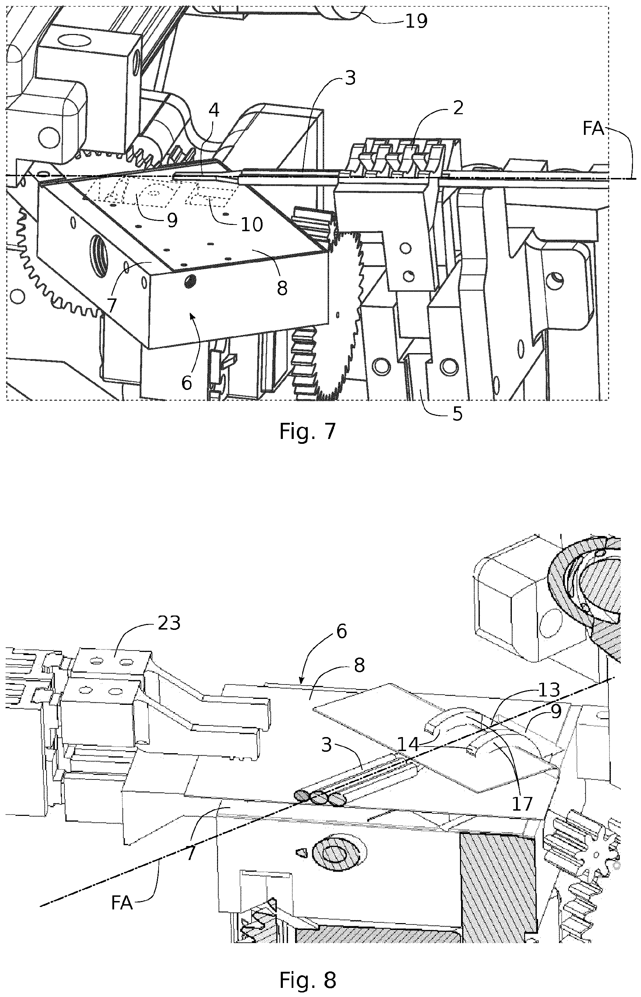

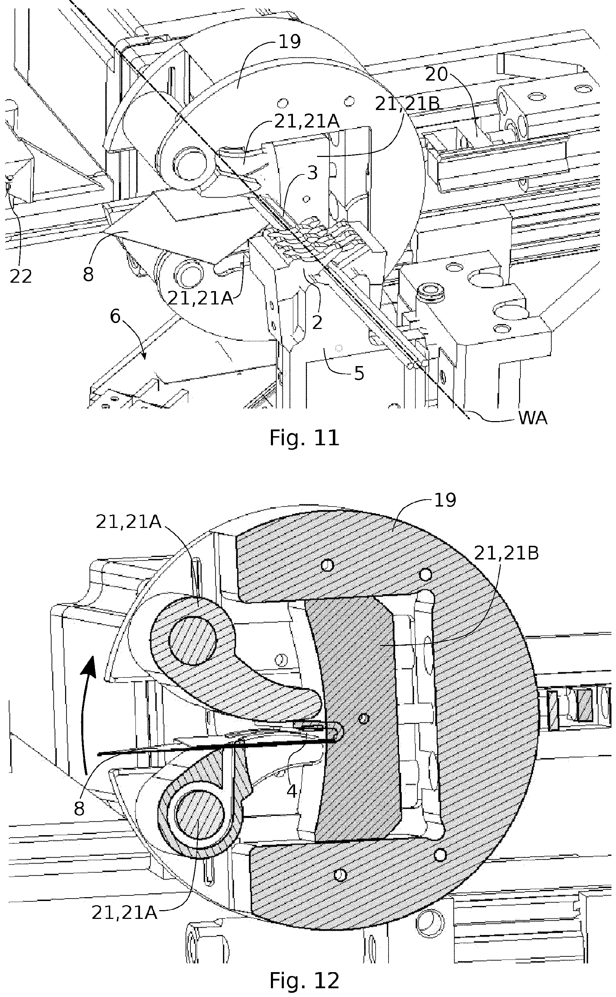

The holding claw 2 is movable between :
- a folding position in which the holding claw 2 arranges the electrical wiring element 3 along a folding axis FA, as shown in Figure 7; and
- a winding position in which the holding claw 2 arranges the electrical wiring element 3 along a winding axis WA, as shown in figure 11.

The holding claw 2 is made by any device suitable for holding a longitudinal wiring element 3. These may be clamps, jaws, grabbing means, or any other known suitable device. In the examples shown, the holding claw 2 is made up of two controlled jaws that can be moved between an open position in which the wiring element 3 can be inserted, and a closed position in which the wiring element 2 is held.

The folding axis FA is relative to folding means which will allow a particular folding of a portion of insulating adhesive tape on the terminal 4, and the winding axis WA is relative to the completion of the insulation of the terminal 4. The holding claw 2 enables the wiring element 3 (and therefore the terminal 4) to be held in place during these two operations, and the wiring element 3 (and therefore the terminal 4) to be moved between these two positions, without the need for any part removal.

The holding claw 2 can be moved by any suitable translation and/or rotation device. In the present example, particularly advantageously in terms of positioning the terminal 4, the holding claw 2 is arranged on a lifting element 5 which is translationally movable in a direction substantially perpendicular to the folding axis FA. In the present example, the translational direction of the elevator element 5 is substantially vertical, to facilitate positioning on the folding means. The lifting element is actuated by a cylinder, for example.

The folding means are provided by a folding table 6 which has a receiving surface 7 substantially parallel to the folding axis FA and adapted to receive insulating adhesive tape portion 8.

The receiving surface 7 is preferably flat and substantially horizontal.

The folding table 6 can be made by any conventional mechanical means to form a part which includes the receiving surface 7, and which includes cavities 9, 10 in its mass, for example by machining a solid part, by mechanically-welded assembly, by molding, by additive manufacturing, etc.

The folding table 6 features two cavities 9, 10 which are arranged below the level of the receiving surface 7, and which open out into the receiving surface 7. These cavities 9, 10 are defined as housings for maintaining an axis of rotation below the level of the receiving surface 7. The folding table thus comprises a first cavity 9 which defines the housing of a rotation axis 11 which is substantially perpendicular to the folding axis FA. The folding table also comprises a second cavity 10 which defines the housing of a rotation axis 12 which is substantially parallel to the folding axis FA.

The cavities 9, 10 and corresponding rotation axes 11, 12 can be created simply by walls cut into the mass of the folding table 6, with axes mounted on bearings or other rotating elements on these walls.

The folding table also features a first folding lever 13 mounted for rotation about axis 11. This first folding lever 13 has at least one bonding finger 14. The bonding finger(s) 14 are designed to fold the insulating adhesive tape onto itself and apply localized pressure to create a preliminary bonding point. The first folding lever 13 preferably features a curved arm 17 connecting the bonding finger(s) 14 to the axis of rotation 11. This curved arm 17 enables the bonding finger(s) 14 to deploy and trajectory around the terminal 4 to be insulated. According to the illustrated example, the first folding lever 13 comprises two bonding fingers 14 which are spaced apart by a distance greater than the width of the terminal 4 to be insulated. Preferably, when there are several bonding fingers 14, these bonding fingers are aligned on a straight line substantially perpendicular to the folding axis FA.

The first folding lever 13 is rotatable about its axis 11. Thanks to this rotation, the first folding lever is movable between: a retracted position in which the first folding lever 13 is arranged in the first cavity 9, below the level of the receiving surface 7; and a deployed position in which the at least one bonding finger 14 is arranged against the receiving surface 7.

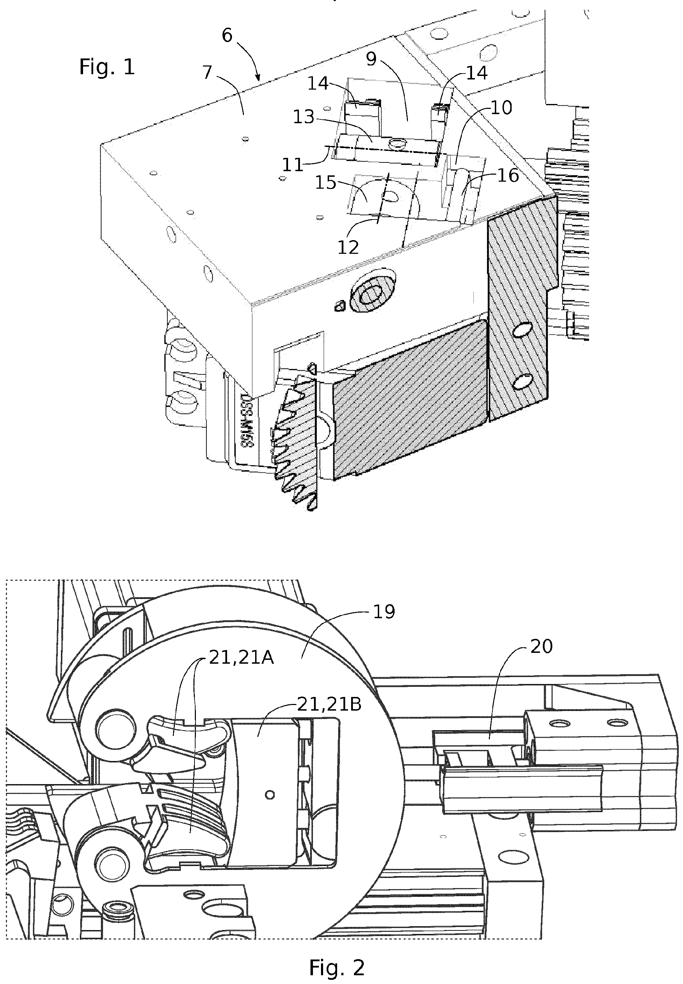

In the retracted position, the first folding lever 13 retracts into the folding table 6, so that it is set back from the receiving surface 7 and is not flush with the receiving surface 7. In the retracted position, the insulating tape can be placed on the receiving surface 7 without interacting with the first folding lever 13. Figure 1 shows the first folding lever 13 in its retracted position.

When the insulating adhesive tape is in place on the receiving surface 7, passage of the first folding lever 13 to the deployed position causes the adhesive tape to be folded into a fold that is substantially perpendicular to the folding axis FA, and a bonding point to be formed at the end of each bonding finger 14. Figure 8 shows the first folding lever 13 in its deployed position.

The folding table 6 also features a second folding lever 15 mounted for rotation about axis 12. This second folding lever 15 comprises a bonding bar 16. The bonding bar 16 is designed to fold the insulating adhesive tape back on itself, after the first fold made by the first folding lever 13, and to apply a localized linear pressure to it, in order to create a bonding line. The bonding bar 16 is cylindrical, for example, or is made by a rounded edge of the second folding lever 15. The second folding lever 15 preferably features a curved arm 18 connecting the bonding bar 16 to the axis of rotation 12. This curved arm 18 enables the bonding bar 16 to be deployed and traveled around the terminal 4.

As with the first folding lever 13, the second folding lever 15 is rotatable about its axis 12. Thanks to this rotation, the second folding lever 15 is movable between: a retracted position in which the second folding lever 15 is arranged in the second cavity 10, below the level of the receiving surface 7; and an deployed position in which the bonding bar 16 is arranged against the receiving surface 7.

In the retracted position, the second folding lever 15 retracts into the folding table 6, so that it is set back from the receiving surface 7, and is not flush with the receiving surface 7. In the retracted position, the insulating tape can be placed on the receiving surface 7 without interacting with the second folding lever 15. Figure 1 shows the second folding lever 15 in its retracted position.

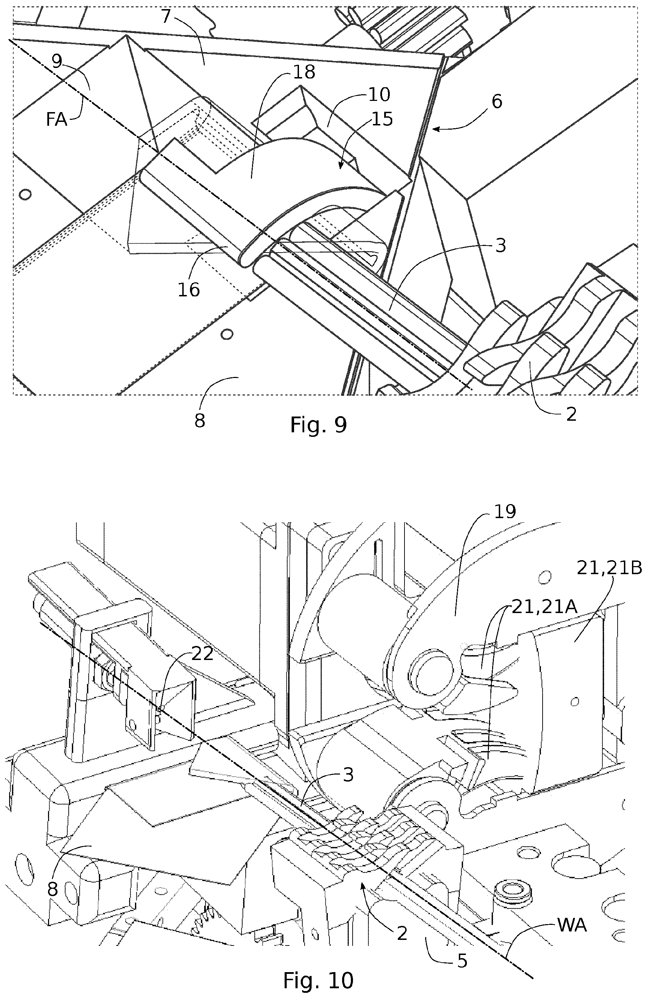

When the insulating adhesive tape is in place on the receiving surface 7, the passage of the second folding lever 15 to the deployed position causes the adhesive tape to be folded along a fold that is substantially parallel to the folding axis FA, and a bonding line that is also parallel to the folding axis FA. Figure 9 shows the second folding lever 15 in its deployed position.

The first folding lever 13 and the second folding lever 15 can be set in motion by any means known in the field of automation, such as electric or pneumatic motors, as well as the sensors and control means commonly associated with them.

The winding means of the insulation device comprise a winding drum 19 which is adapted to be rotatable about the winding axis WA.

In the example shown, the winding drum 19 is made of a generally cylindrical mechanical structure, an example of which is illustrated in Figures 2 and 10 to 12.

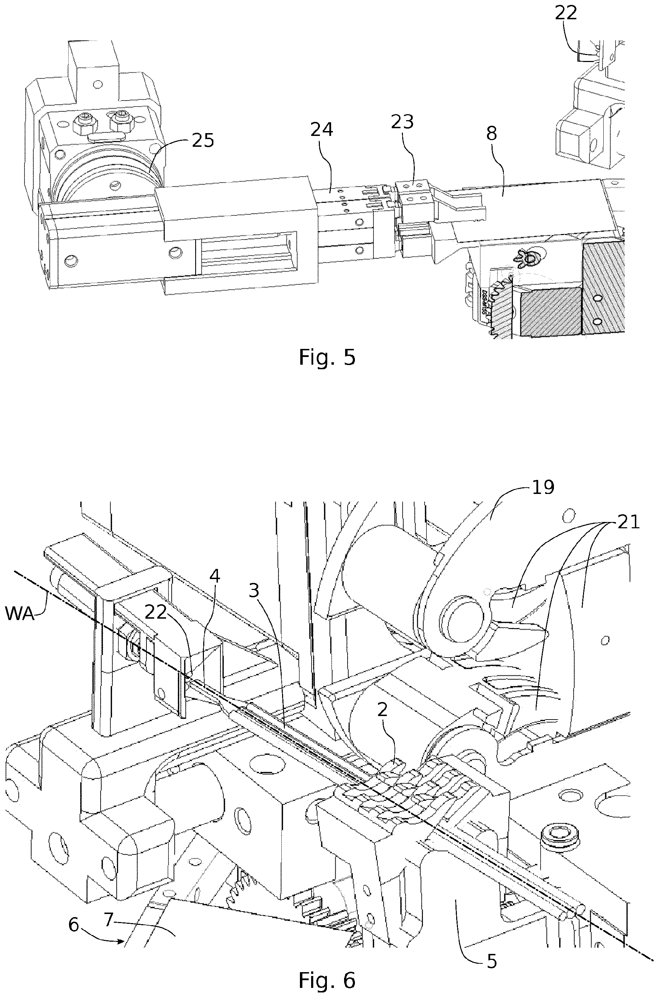

The winding drum 19 is movable between :
- a standby position in which the winding drum 19 is away from the winding axis WA (the position shown in Figures 6 and 10); and
- a working position in which the winding drum 19 is centered on the winding axis WA (the position shown in figure 11).

When the winding drum 19 is in its working position, it is rotatable about the winding axis WA.

In the present example, the winding drum 19 is mounted for translational movement between its two positions in a direction substantially perpendicular to the winding axis WA. In the example shown, this translation is achieved by means of a cylinder.

The rotational mounting and mobility of the winding drum 19 can be achieved by any conventional means, such as mounting on a rotational axle, which is itself movable along a rail between the standby and working positions.

The winding drum 19 has at least two jaws 21 adapted to clamp concentrically on the winding axis WA when the winding drum 19 is in its working position.

In the present example, the winding drum 19 has three jaws 21: two symmetrical jaws 21A and a central jaw 21B. The three jaws 21 have an opening direction and a closing direction, and are biased towards their closing direction by elastic means, such as springs. The winding drum 19 also features an opening device for returning the jaws 21 to their opening direction, against the action of the elastic means. This opening device may, for example, comprise an opening cylinder 20 and the appropriate means for transmitting the movement from the cylinder 20 to the jaws 21. The jaws 21 are thus normally closed, and the opening cylinder 20 causes them to open.

In the present example, the symmetrical jaws 21A are formed by rotary levers rotatably mounted on the winding drum 19. These rotating levers have a cylindrical surface in contact with the element to be wound. The central jaw 21B is formed by a pad that can be moved in translation in a direction substantially perpendicular to the winding axis, and also has a cylindrical contact surface.

The cylindrical contact surfaces of the jaws 21 are shaped to provide angularly distributed contact around an element to be wound.

The insulation device can also include a positioning stop 22 to guarantee the longitudinal position of the terminal 4, with a view to the folding and winding operations. In the illustrated example, positioning stop 22 is translationally movable between a position where it is arranged on winding axis WA, and a position where it is set back from this winding axis WA to enable winding operations.

In the present example, the positioning stop 22 is surrounded by prismatic surfaces forming a neck, so as to guide the terminal 4 to be insulated, whose transverse position varies slightly due to the flexibility of the cables at the end of which the terminal 4 is located.

In the present example, which is particularly advantageous in terms of positioning the various elements, the positioning stop 22 and the winding drum 19 are mounted on the same translatory frame, so that the positioning stop 22 and the winding drum 19 are simultaneously translated between their respective positions:
- in a first joint position, positioning stop 22 is on winding axis WA and winding drum 19 is in its standby position; and
- in a second joint position, positioning stop 22 is away from winding axis WA and winding drum 19 is in its working position.

The translation of these elements thus enables the positioning stop 22 and the winding drum WA to share the occupation of the winding axis WA, which in this example remains vertical to the folding axis FA.

In this case, positioning stop 22 is preferably adapted to be retracted from its initial working position, to a position in which it is away from terminal 4, along winding axis WA. Once the electrical wiring element 3 has been placed in the holding claw 2, with the positioning stop 22 in its working position and acting as a stop for the terminal 4, and once the holding claw 22 has been closed, the positioning stop 22 can be retracted along the winding axis WA away from the terminal 4, to allow subsequent vertical translation movements of the electrical wiring element 3 between the winding axis WA and the folding axis FA.

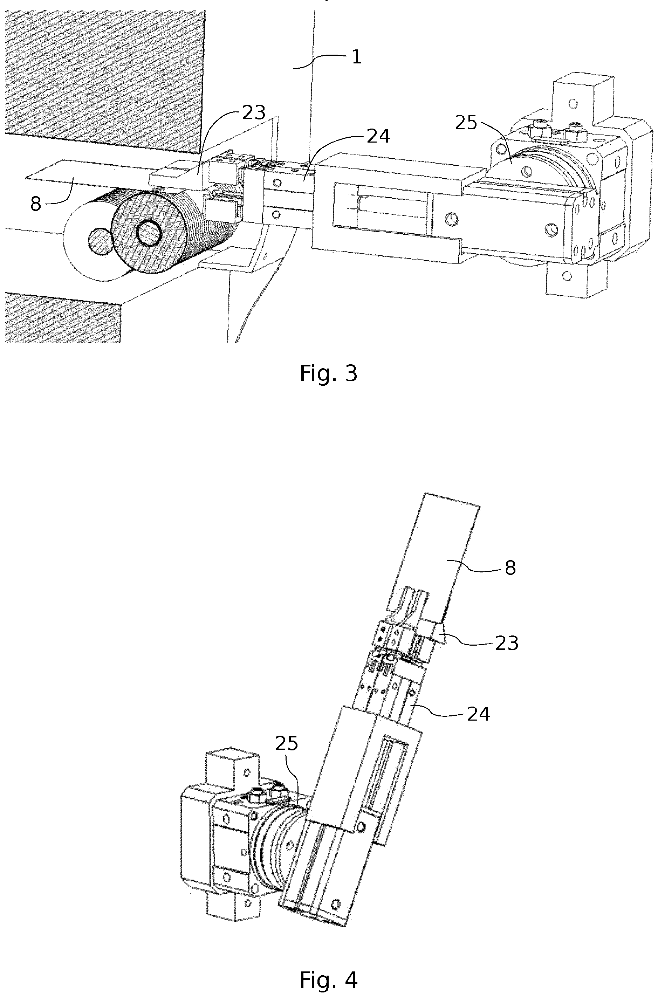

Optionally, the device can also include means for positioning the adhesive tape portion 8 on the folding table 6. In the example shown, which is particularly advantageous from the point of view of productivity, these means comprise a tilting clamp 23 which has a telescopic body 24 rotatably mounted on a pivot 25, an example of which is shown in Figures 3 to 5.

The device just described is used to implement the process according to the invention.

In the example shown, the folding axis FA and the winding axis WA are arranged in the same vertical plane, with the winding axis WA above the folding axis FA. The folding table 6 is therefore located below the winding drum 19 in the operating position, and vertically above it.

First, an adhesive tape portion 8 is placed on the folding table 6, with the adhesive side facing upwards.

During insertion of the adhesive tape portion 8, the first folding lever 13 and the second folding lever 15 are in their retracted position.

The tilting clamp 23 first grips a portion of adhesive tape 8 dispensed by any suitable equipment as shown in figure 3, such as a conventional tape portion dispenser 1. The tape portion 8 is dispensed with its adhesive side downwards.

The telescopic body 24 of the tilting clamp 23 is then retracted to extract the tape portion 8, after which the tilting clamp 23 is tilted, by rotation of the pivot 25, as shown in Figure 4. The tilting clamp 23 and the folding table 6 are arranged so that the tilting clamp 23 arranges the adhesive tape portion 8 on the receiving surface 7, the tilting clamp 23 remaining clear of the edge of the folding table 6 so that the adhesive tape portion 8 lies flat on the receiving surface 7, adhesive side up, as illustrated in Figure 5.

In this position, the jaws of the tilting clamp 23 can be opened. It is possible for a portion of the adhesive face of the tape to remain stuck to the top jaw of the tilting clamp 23, which does not interfere with subsequent folding operations, as the tilting clamp 23 remains in place during these folding operations.

The adhesive portion 8 is preferably a rectangular portion with one corner aligned with the folding axis FA.

The device is then configured as follows:
- the holding claw 2 is brought into its winding position and opened;
- the winding drum is moved to its standby position, with the positioning stop 22 moved to its position on the winding shaft.

The electrical wiring element 3 is then presented in the open holding claw 2, and is slid longitudinally (i.e. along the winding axis WA) towards the positioning stop 22 until the terminal 4 comes into contact with the positioning stop 22.

The holding claw 2 is then closed over the wiring element 3, which is not repositioned until the insulation process is complete, as shown in Figure 6.

The holding claw 2 is then moved to its folding position. In the illustrated example, the holding claw 2 is translated vertically downwards towards the folding table 6, as shown in figure 7.

The folding position of the holding claw is chosen so that the terminal 4 is arranged in the folding axis FA when the terminal 4 comes against the receiving surface 7 provided with the adhesive tape portion 8. The terminal 4 is thus positioned against the adhesive face of the adhesive tape portion 8.

In a particularly advantageous embodiment, in terms of folding efficiency, as illustrated, the adhesive tape portion 8 has a corner oriented along the folding axis FA.

In the example shown, the folding axis FA is substantially horizontal. Although the folding axis FA is substantially horizontal, it may be slightly inclined so that the end of the wiring element 3 (the terminal 4) is lower than the rest of the wiring element 3, so that the movement of the holding claw 2 towards its folding position causes the terminal 4 to be the first to come into contact with the folding table 6 provided with the adhesive tape portion 8. At the end of the movement, when the holding claw 2 has reached its folding position, the wiring element 3 presents a slight curvature at the exit of the holding claw 2, so that the wiring element extends against the receiving surface 7, which is horizontal.

The first folding lever 13 is then activated towards its deployed position so that it causes a first folding of the adhesive tape portion 8, as illustrated in figure 8. The first folding lever 13 is thus rotated about its axis, so that the bonding finger(s) 14 come into contact with the receiving surface 7 provided with the adhesive tape portion 8. The curved arm 17 allows the thickness of the terminal 4 to be circumvented, so that the bonding finger(s) 14 press the first fold against the rest of the adhesive tape portion 8, adhesive side against adhesive side. The first fold thus has as many adhesive-to-adhesive attachment points as there are bonding fingers 14.

In the example shown, the first fold is sealed by two fixing points on either side of the terminal 4.

The first folding lever 13 is then returned to its retracted position.

The second folding lever 15 is then activated to its deployed position so that it causes a second folding of the adhesive tape portion 8, substantially perpendicular to the first folding, as illustrated in figure 9. The second folding lever 15 is thus driven in rotation about its axis, so that the bonding bar 16 comes into contact with the receiving surface 7 provided with the portion of adhesive tape 8. The curved arm 18 bypasses the thickness of the terminal 4 so that the adhesive bar 16 presses the second fold against the rest of the adhesive tape portion 8, adhesive side against adhesive side. The second fold is thus sealed by an adhesive-to-adhesive fastening line running substantially parallel to the wiring element 3.

The combination of the fastening points of the first fold with the fastening line of the second fold enables these two folds to be sealed quickly and precisely, without the risks associated with the adhesive portions attracting each other, even though the insulation function has not yet been achieved, as this requires the adhesive tape to be crushed all the way around the terminal 4.

The second folding lever 15 is then returned to its retracted position.

The holding claw 2 is then moved back to its winding position, as shown in Figure 10. In the example shown, the lifting element 5 drives the holding claw 2 in a simple upward vertical translation. In this displacement, the holding of the adhesive tape portion 8 on the electrical wiring element 3 by the two folds made is sufficient to pull the adhesive tape portion 8 away from the top jaw of the clamp 23, which can then return to position to grip a new adhesive tape portion 8, for the next cycle.

When the holding claw 2 has reached its winding position, the winding drum 19 opening device is activated, with the winding drum 19 in its waiting position, so that the jaws 21 open.

The winding drum 19 is then moved to its working position, surrounding the terminal 4.

The winding drum opening device 19 is then released, so that the jaws 21 close concentrically on the terminal 4, as shown in Figure 11.

The winding drum 19 is then rotated about the winding axis WA, so that the remaining part of the adhesive tape portion 8 (apart from the two folds made previously) is wound around the electrical wiring element, completely covering the terminal 4.

Thanks to the concentric holding of the winding drum 19 on the winding axis WA, this operation is carried out while the electrical wiring element 3 is cantilevered, held at a distance by the holding claw 2, with the terminal 4 unsupported at the end of the electrical wiring 3.

The jaws 21 allow the entire portion of adhesive tape 8 to be rolled up, and also provide a rotating concentric pressure that secures the adhesive around the entire circumference of the electrical wiring element 3, thus completing the bonding points and lines created by the two folds.

The cross-sectional view in Figure 12 illustrates the internal positioning in the winding drum 19. In this example, the winding drum 19 is rotated from its initial position in the figure in the direction indicated by the arrow.

At the end of the winding operation, after a number of turns sufficient to wind the entire portion of adhesive tape 8 (e.g. in the order of 2 to 5 turns), the winding drum opening device 19 is then activated, and the electrical wiring element 3 can be removed.

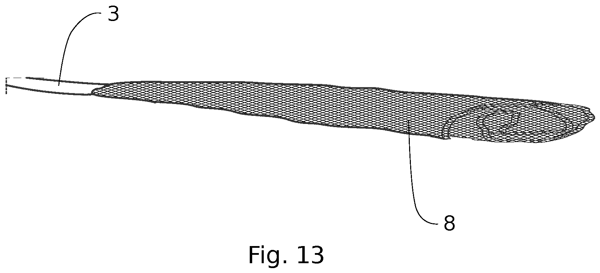

Figure 13 shows the result of electrical isolation of terminal 4.

The device thus enables electrical insulation to be achieved on all sides of the terminal 4 (radial and axial sides), quickly and reliably.

All operations are organized, with few movements, around two axes (the folding axis FA and the winding axis WA), with a simple movement from one axis to the other of the terminal 4 to be insulated, with one and the same part gripped in the holding claw 2.

The various mechanical functions described can be implemented in any number of different ways. For example, the winding drum 19 can have two jaws that close concentrically, but can also have more than three jaws. The folding table can also feature additional levers for making further folds, beyond the first and second folds.

## Claims

1. Device for electrically insulating an electrical wiring terminal by applying an electrically insulating adhesive tape, **characterized in that** it comprises :
- a holding claw (2) adapted to hold an electrical wiring element (3) having a terminal (4) to be electrically insulated, this holding claw (2) being movable between: a folding position in which the holding claw (2) arranges the electrical wiring element (3) along a folding axis (FA); and a winding position in which the holding claw (2) arranges the electrical wiring element (3) along a winding axis (WA);
- a folding table (6) having a receiving surface (7) adapted to receive a insulating adhesive tape portion (8);
- a winding drum (19) adapted to rotate about the winding axis (WA) and comprising at least two jaws (21) adapted to clamp concentrically on the winding axis (WA);
the folding table (6) further comprising :
- a first folding lever (13) rotatably mounted about an axis (11) which is substantially perpendicular to the folding axis (FA) and which is disposed inside a first cavity (9) of the folding table (6), this first folding lever (13) comprising at least one bonding finger (14), this first folding lever (13) being rotatable between : a retracted position in which the first folding lever (13) is arranged in the first cavity (9), below the level of the receiving surface (7); and a deployed position in which the at least one bonding finger (14) is arranged against the receiving surface (7);
- a second folding lever (15) mounted for rotation about an axis (12) which is substantially parallel to the folding axis (FA) and which is disposed inside a second cavity (10) of the folding table (6), this second folding lever (15) comprising a bonding bar (16) substantially parallel to the folding axis (FA), this second folding lever (15) being rotatable between : a retracted position in which the second folding lever (15) is arranged in the second cavity (10), below the level of the receiving surface (7); and a deployed position in which the bonding bar (16) is arranged against the receiving surface (7).

2. Electrical insulating device according to claim 1, **characterized in that** the first folding lever (13) has two bonding fingers (14), arranged on either side of the folding direction (FA) when the first folding lever (13) is in its deployed position.

3. Electrical insulation device according to one of the preceding claims, **characterized in that** the bonding bar (16) of the second folding lever (15) is substantially parallel to the folding axis (FA).

4. Electrical insulation device according to one of the preceding claims, **characterized in that** it comprises a positioning stop (22) for the terminal (4), adapted to be aligned with the winding axis (WA).

5. Electrical insulating device as claimed in claim 4, **characterized in that** the positioning stop (22) and the winding drum (19) are mounted on a single frame which can be moved in translation between two positions corresponding to a standby position of the winding drum (19) and a working position of the winding drum (19).

6. Electrical insulation device according to one of the preceding claims, **characterized in that** the winding drum (19) comprises three jaws (21) adapted to clamp concentrically on the winding axis (WA).

7. Electrical insulating device according to claim 6, **characterized in that** the winding drum (19) comprises :
- two symmetrical jaws (21A) formed by rotating levers rotatably mounted on the winding drum (19), each having cylindrical contact surfaces; and
- a central jaw (21B) formed by a pad movable in translation in a direction substantially perpendicular to the winding axis (WA), and comprising a cylindrical contact surface.

8. Electrical insulating device according to one of the preceding claims, **characterized in that** the jaws (21) of the winding drum (19) have self-centering springs, and are normally closed.

9. Electrical insulating device according to one of the preceding claims, **characterized in that** the winding drum (19) comprises an opening device adapted to open the jaws (21).

10. Electrical insulation device according to one of the preceding claims, **characterized in that** the folding axis (FA) and the winding axis (WA) are substantially parallel and vertically aligned.

11. Electrical insulator according to claim 10, **characterized in that** the folding table (6) is arranged below the winding drum (19).

12. Electrical insulating device according to one of the preceding claims, **characterized in that** the holding claw (2) is mounted on a lifting element (5).

13. Electrical insulating device according to one of the preceding claims, **characterized in that** it comprises a tilting clamp (23) adapted to grasp an insulating adhesive tape portion (8) and turn it over.

14. Electrical insulating device according to claim 13, **characterized in that** the tilting clamp (23) comprises a telescopic body (24) mounted on a pivot (25), and is adapted to place the insulating adhesive tape portion (8) on the folding table (6), adhesive side up.

15. Method of electrically insulating an electrical wiring terminal by applying an electrically insulating adhesive tape using an electrical insulating device according to one of claims 1 to 14, **characterized in that** it comprises the following steps:
- place an insulating adhesive tape portion (8) on the folding table (6), adhesive side up;
- place on the holding claw (2) an electrical wiring element (3) having at its end the terminal (4) to be insulated, the holding claw (2) being in its winding position;
- move the holding claw (2) to its folding position, the terminal (4) to be insulated coming into contact with the adhesive face of the insulating adhesive tape portion (8);
- activate the first folding lever (13) to its deployed position;
- activate the second folding lever (15) to its deployed position;
- move the holding claw (2) to its winding position;
- with the winding drum (19) in a standby position, away from the winding axis (WA), open the jaws (21) of the winding drum (19);
- move the winding drum (19) to a working position on the winding axis (WA) and close the jaws (21) of the winding drum (19) on the terminal (4) fitted with the insulating adhesive tape portion (8);
- rotate the winding drum (19).
